## Europäisches Patentamt
## European Patent Office
## Office européen des brevets

(11) Numéro de publication: **0 273 785**
**A1**

(12)
# DEMANDE DE BREVET EUROPEEN

(21) Numéro de dépôt: **87402617.2**

(22) Date de dépôt: **19.11.87**

(51) Int. Cl.⁴: **B 65 G 47/24**

(30) Priorité: **21.11.86 FR 8616242**

(43) Date de publication de la demande:
**06.07.88 Bulletin 88/27**

(84) Etats contractants désignés:
**AT BE CH DE ES GB GR IT LI LU NL SE**

(71) Demandeur: **LA TELEMECANIQUE ELECTRIQUE
33 bis, avenue du Maréchal Joffre B.P. 204
F-92002 Nanterre Cédex (FR)**

(72) Inventeur: **Paris, Claude
4 bis avenue Derondel
F-95120 Ermont (FR)**

(74) Mandataire: **Robert, Jean-Pierre et al
CABINET BOETTCHER 23, rue la Boétie
F-75008 Paris (FR)**

(54) **Ligne d'acheminement de pièces pour une distribution orientée de ces dernières.**

(57) La ligne d'acheminement selon l'invention comporte au moins une section d'extraction (1) des pièces en vrac contenues dans une trémie (2) permettant une première sélection de pièces en fonction de leur hauteur, une seconde section (10) d'alignement de ces pièces pour orienter leurs dimensions longitudinales parallèlement à la direction de déplacement de la ligne, et au moins une troisième section (11) (17) comportant des moyens de blocage (13,14) des pièces, des moyens de palpage (15) et des moyens de retournement des pièces (16) en réponse à l'information délivrée par les moyens de palpage.

Fig. 2B

EP 0 273 785 A1

## Description

Ligne d'acheminement de pièces pour une distribution orientée de ces dernières

La présente invention a pour objet une ligne de transport et d'acheminement de pièces depuis un poste où elles sont en vrac jusqu'à un poste où elles sont délivrées de manière orientée à des fins d'usinage ou d'assemblage.

Dans la plupart des lignes ou ateliers d'assemblage, il est nécessaire de présenter les constituants de l'assemblage à réaliser dans une orientation déterminée. Il existe des systèmes pour assurer cette fonction d'orientation qui sont généralement appelés bols vibrants.L'une des limites d'utilisation de ces systèmes connus réside dans la dimension des pièces, qui sont généralement de petite taille. Dans d'autres dispositifs, on utilise, pour extraire d'une trémie contenant des objets en vrac, des systèmes à bande transporteuse pourvue de taquets, dont la hauteur des taquets et l'inclinaison par rapport à la verticale est telle que seules les pièces présentant une première orientation générale peuvent être manipulées par la bande. Dans ces dispositifs comme dans les bols vibrants, on procède à l'élimination des pièces qui ayant satisfait un premier critère d'orientation ne satisfont pas au critère final de celles-ci. Les pièces ainsi éliminées sont recyclées, ce qui complique l'installation et diminue son efficacité.

Pour des pièces plus encombrantes, on procède généralement entre la sortie de la ligne de production du composant et l'entrée de la ligne d'assemblage, à un rangement manuel orienté dans les conteneurs ou sur des palettes possédant des alvéoles permettant de maintenir l'orientation assignée à la pièce. Cette manière de faire implique une certaine main d'oeuvre et un transport plus délicat donc plus coûteux qu'un transport des pièces en vrac.

La présente invention entend remédier à ces inconvénients en proposant, entre un poste de stockage en vrac et un poste d'entrée d'une ligne d'assemblage, auquel les pièces doivent arriver orientées de manière précise, une ligne d' acheminement au cours de laquelle les pièces en mauvaise posi tion sont détectées, reconnues et manipulées pour obtenir la position qui convient à l'assemblage. L'une des caractéristiques de cette ligne d'acheminement est d'être modulaire, chacun des modules qui la constitue assurant une fonction élémentaire de modification de l'orientation des pièces, la ligne finale pouvant ainsi être adaptée aisément au nombre minimal de manipulations qu'il est nécessaire de faire subir à une pièce pour l'amener dans sa bonne position. Le caractère modulaire de la ligne permet donc de l'adapter aux formes des pièces à manipuler.

Plus précisément, l'invention a donc pour objet une ligne d'acheminement de pièces circonscrites dans une enveloppe théorique sensiblement parallélépipédique, dont la hauteur est inférieure à la largeur, elle-même inférieure à la longueur, depuis un poste de chargement en vrac jusqu'à un poste de distribution orienté des pièces.

Selon l'une des caractéristiques importantes de l'invention, la ligne susdite comporte une succession de sections modulaires de transport et d'orientation comprenant :
- une première section d'extraction des pièces d'une trémie d'approvisionnement comportant une bande transporteuse plane et des moyens pour éliminer toute pièce qui ne présente pas sa hauteur perpendiculairement au plan de la bande,
- une seconde section d'alignement des pièces comportant une bande transporteuse plane et des moyens pour orienter la longueur susdite parallèlement au sens de déplacement de la bande,
- et au moins une troisième section de retournement de pièces comportant une bande transporteuse plane, des moyens pour immobiliser chaque pièce, des moyens de reconnaissance par palpage perpendiculaire à la bande de la face supérieure de la pièce immobilisée, et des moyens de retournement de la pièce autour d'un axe perpendiculaire à la direction de déplacement de la bande , activés en réponse aux infor mations recueillies par lesdits moyens de palpage.

Selon le cas, la ligne peut comporter une ou deux sections de retournement des pièces, les moyens de retournement de la pièce étant disposés soit autour d'un axe perpendiculaire à la surface de la bande transporteuse, soit autour d'un axe parallèle à cette surface.

Une réalisation préférée de la première section de la ligne selon l'invention, consiste en une bande d'extraction ascendante,pourvue de taquets d'entraînement des pièces, circulant sous une butée oblique transversale distante de la bande d'une valeur légèrement supérieure à la hauteur des pièces, constituant guide pour l'élimination latérale des pièces présentant, perpendiculairement à la bande, une dimension supérieure à ladite hauteur.

Une réalisation de la seconde section de la ligne selon l'invention, ne comprend qu'une bande transporteuse sensiblement horizontale, animée d'une vitesse de translation supérieure à celle de la bande d'extraction susdite, et deux guides latéraux convergents, l'un des guides étant constitué par une bande souple mobile dans la direction de la bande transporteuse, à une vitesse supérieure à celle de cette dernière.

Dans la troisième section susdite, on trouvera une bande transporteuse sensiblement horizontale, une butée escamotable transversalement à la bande et au-dessus de celle-ci, un moyen de blocage latéral des pièces contre un guide latéral fixe, en amont de la butée et distant de celle-ci d'une valeur sensiblement égale à la longueur d'une pièce, un dispositif de palpage mobile verticalement par rapport à une potence fixe et surplombant la bande entre la butée et le dispositif de blocage, et un organe de retournement commandé par l'information délivrée par le dispositif de palpage, et situé en aval de la butée, comprenant lui-même une butée normalement active, escamotable, associée à l'extrémité aval d'un couloir formé par des parois latérales de contention de la pièce, montées à rotation commandée autour d'un axe perpendiculaire à la direction de déplacement de la bande transporteuse.

Si l'axe de rotation susdit est perpendiculaire à la bande, les parois sont constituées par des plaques de guidage parallèles, réglables en écartement l'une par rapport à l'autre. Si l'axe de rotation susdit est parallèle à la bande, les parois susdites sont constituées par deux bras parallèles articulés par leur extrémité autour dudit axe et formant des machoîres de préhension de la pièce.

Dans une variante de réalisation d'un organe de retournement autour d'un axe parallèle à la bande, cet axe est situé sous le niveau de ladite bande et à son extrémité aval, l'organe de retournement étant alors constitué par un godet basculant autour de l'axe susdit et dont le fond constitue la butée susdite et ses côtés, lesdites parois latérales.

L'invention sera mieux comprise au cours de la description donnée ci-aprés à titre d'exemple purement indicatif et non limitatif qui permettra d'en dégager les avantages et les caractéristiques secondaires.

Il sera fait référence aux dessins annexés, dans lesquels :
- la figure 1 illustre les quatre positions possibles d'une pièce au sortir des deux premiéres sections de la ligne, selon l'invention ;
- la figure 2A est une vue schématique en élévation de la ligne d'acheminement selon l'invention ;
- la figure 2B est une vue de dessus schématique de la ligne représentée à la figure 2A,
- la figure 3 est une vue schématique de la première section d'extraction et de pré-orientation des pièces de la ligne selon l'invention,
- la figure 4 est une vue schématique des moyens assurant l'alignement des pièces dans la deuxième section de la ligne selon l'invention,
- les figures 5, 6 et 7 illustrent des modes de réalisation des moyens de blocage et de reconnaissance des pièces dans la troisième section de la ligne,
- la figure 8 illustre schématiquement un mode de réalisation d'un organe de retournement de pièces autour d'un axe perpendiculaire à la bande transporteuse de troisième section,
- la figure 9 illustre un deuxième organe de retournement autour d'un axe parallèle à la bande transporteuse de la troisième section,
- et la figure 10 illustre une variante de réalisation du dispositif de retournement de la figure 9.

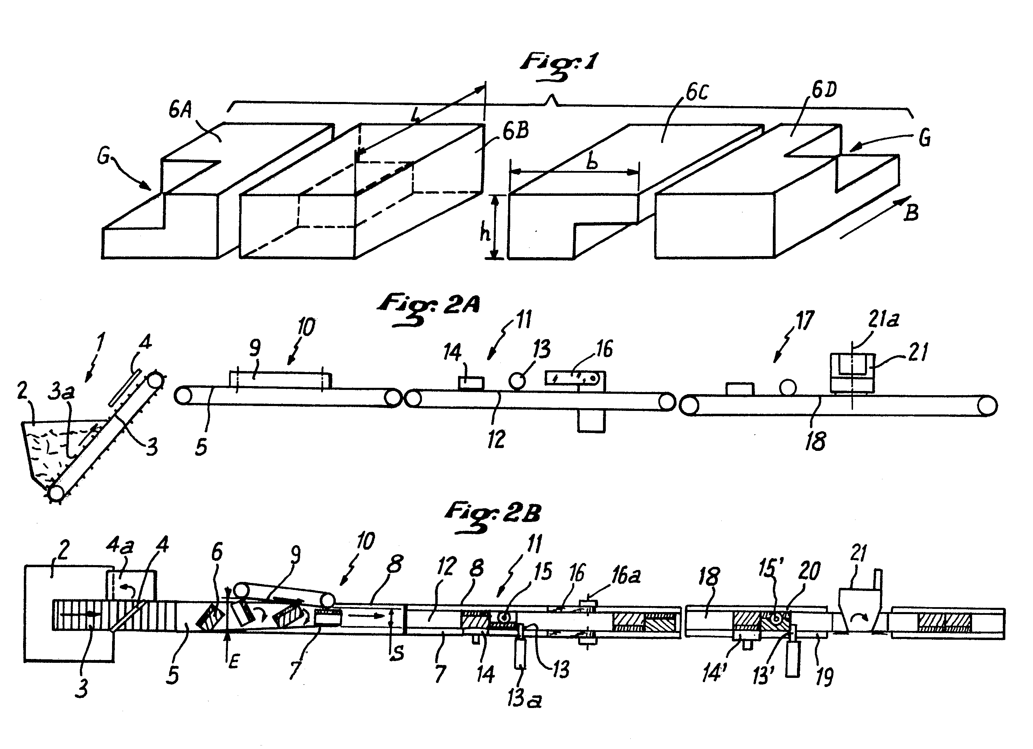

En se reportant tout d'abord aux Figures 2A et 2B, on voit en partie extrême gauche de la ligne représentée, une section 1 d'extraction des pièces contenues dans une trémie 2 en vrac, permettant, au moyen d'une bande transporteuse 3 pourvue de taquets 3a, et passant sous une butée d'élimination 4 des pièces trop hautes sur la bande, d'amener sur une seconde bande transporteuse 5 horizontale des pièces 6 telles que schématiquement représentées à la Figure 1.

Les pièces 6 de la figure 1, volontairement schématiques, peuvent être inscrites dans un parallélépipède théorique de hauteur h plus petite que leur largeur b et plus petite que leur longueur L. La section d'extraction 1 décrite en regard des Figures précédentes, permet de délivrer sur la bande transporteuse 5, uniquement les pièces qui présentent leur hauteur h perpendiculairement à cette bande transporteuse. La bande transporteuse 5 est associée à deux guides latéraux 7 et 8 ainsi qu'à une bande latérale 9 pour former la deuxième section 10 d'alignement de la ligne selon l'invention. La bande 9, qui constitue partiellement l'un des guides latéraux de la section 10, est animée d'un mouvement de translation en direction de la flèche A, c'est-à-dire dans la même direction que celle de déplacement de la bande 5, à une vitesse supérieure à celle de la bande 5. Le guide 7 et la bande 9 sont légèrement convergents, de manière que la largeur d'entrée E de la section 10 soit au moins égale à la plus grande dimension des pièces 6, c'est-à-dire à la plus grande diagonale de leur parallélépipède circonscrit, alors que la largeur de sortie S de cette section est sensiblement égale à la dimension b des pièces 6. On comprend, au vu de la figure 2B, que la bande 9 provoque une rotation sur elle-même des pièces 6 qui entrent de manière anarchique dans la section 10, du fait d'une part, de la vitesse relative de la bande 9 par rapport à la bande 5 et, d'autre part, du caractère stationnaire du guide 7, ces deux éléments constituant un couple d'entraînement des pièces autour d'un axe vertical. Au sortir de la section 10, les pièces 6 peuvent se présenter selon les quatre positions 6a, 6b, 6c et 6d de la figure 1. Sur cette figure, la flèche B représente le sens de déplacement de la bande 5, et la position 6d est la position dans laquelle la pièce 6 doit se présenter à l'extrémité de la ligne d'acheminement.

La section suivant la section 10 est une section 11 de retournement des pièces. Elle comporte une troisième bande transporteuse 12, deux guides latéraux 7 et 8, une butée 13 transversale et pourvue de son moyen d'actionnement 13a pour l'escamoter en dehors du trajet des pièces dans la section 11. En 14, sur les figures 2A et 2B, on a représenté un moyen de blocage de la file de pièces qui circule sur la bande transporteuse 12. Le blocage consiste à serrer latéralement les pièces contre le guide stationnaire 8, pour en supprimer l'entraînement par la bande 12. On notera que ce moyen de blocage est distant de la butée 13 d'une longueur telle que ce soit la pièce suivant immédiatement la pièce en contact avec la butée 13 qui soit arrêtée par ce moyen de blocage 14.

La référence 15 sur la Figure 2B symbolise un moyen de palpage vertical, permettant de reconnaître la face supérieure de la pièce qui est arrêtée dans son action par la butée 13. Le palpeur 15 détecte si la pièce 6 qu'il explore se présente soit comme les pièces 6a et 6d de la figure 1, soit comme celles 6b et 6c. Il émet en conséquence deux signaux différents en direction d'un dispositif de retournement 16. Ce dispositif, dont on verra deux modes de réalisation en regard des figures 9 et 10, est activé quand les pièces orientées comme les pièces 6b ou 6c sont détectées. Il procède alors au retournement de ces pièces autour d'un axe 16a perpendiculaire à la direction de déplacement de la bande 12 mais parallèle à celle-ci de manière qu'à la sortie de la section 11 les pièces aient leurs faces convenables en partie supérieure.

Sur les figures 2A et 2B on a également représenté une section 17 qui, comme la section 11, possède une bande transporteuse 18, deux guides stationnaires 19 et 20, une butée 13′, un dispositif de blocage 14′ et un palpeur 15′. L'agencement relatif des butée , palpeur et dispositif de blocage par rapport à la bande 18, est identique à ceux de la section 11 par rapport à la bande 12. La section 17 possède également un organe de retournement 21, qui sera décrit plus en détail en regard de la Figure 8, permettant de faire tourner la pièce autour d'un axe 21a, perpendiculaire à la direction de déplacement de la bande et à son plan. On voit que grâce au dispositif de palpage 15′, on peut reconnaître la manière avec laquelle la pièce se présente entre les deux positions 6a et 6d de la Figure 1. Si c'est la position 6a qui est détectée, l'organe de retournement 21 est activé et à la sortie de la section 17 la pièce est convenablement orientée.

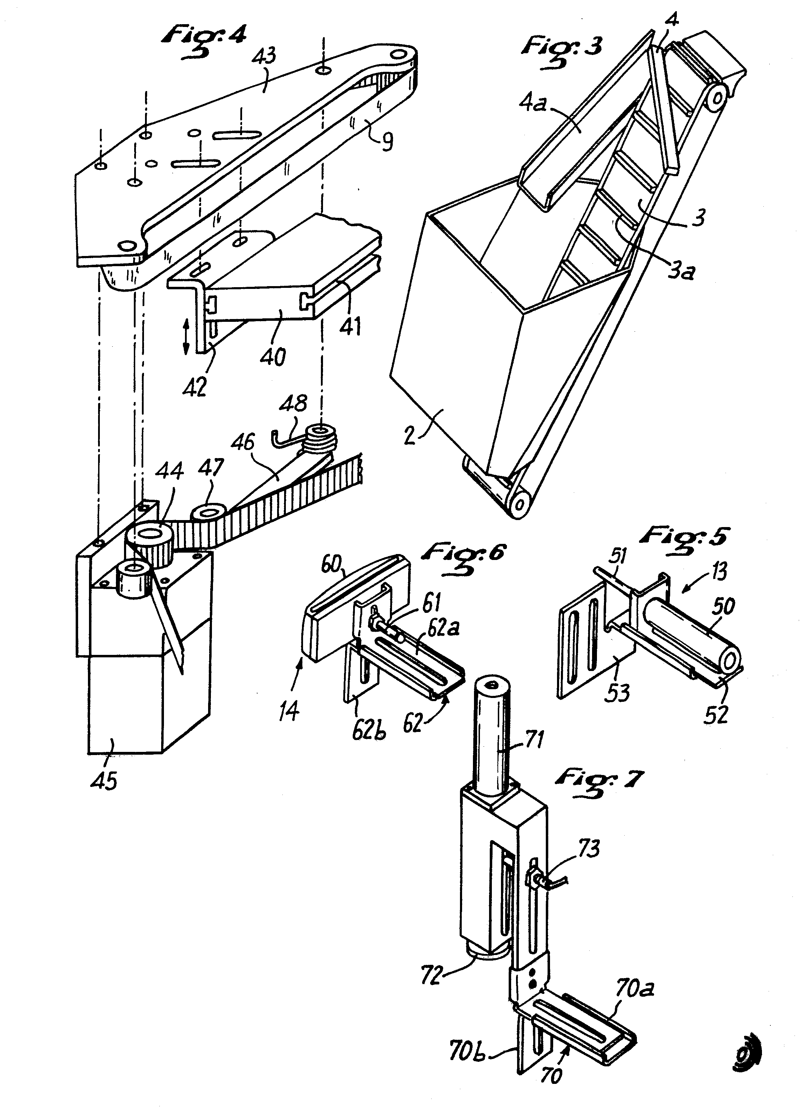

Le fonctionnement général de la ligne s'opère de la manière suivante. Dans la section 1 d'extraction, les pièces contenues dans la trémie 2 sont entraînées par la bande 3, par le moyen des taquets 3a. La barrière 4 située en partie supérieure de la bande 3, élimine les pièces qui ne présentent pas leur hauteur perpendiculairement à cette bande. On voit sur la Figure 3 que la barrière 4 constitue un plan transversal incliné, qui fait glisser les pièces qui ne se présentent pas correctement le long du taquet 3a qui les entraîne, transversalement à ce dernier, de manière à les conduire dans une goulotte de retour 4a, par laquelle elles retombent dans la trémie.

A la partie supérieure de la bande 3 les pièces sont déposées sur la bande 5, par l'intermédiaire par exemple d'un plan incliné de liaison. Les pièces sur la bande 5 se présentent donc à plat.

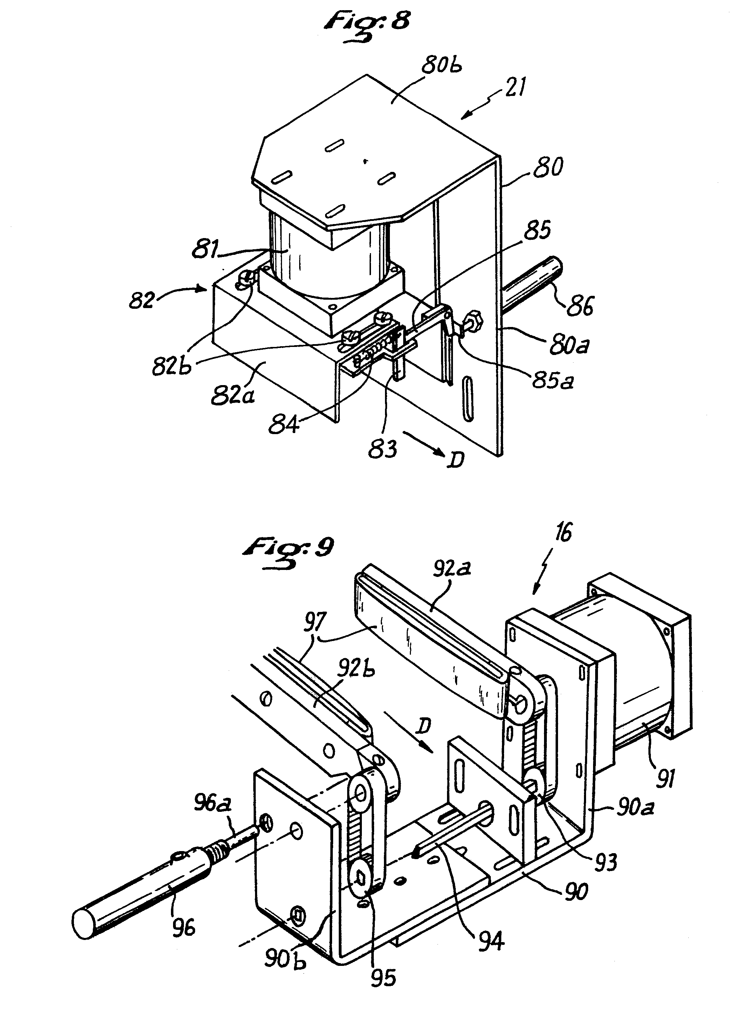

On notera que la vitesse linéaire de déplacement de la bande 3 est inférieure à celle de la bande 5 pour éviter un chevauchement des pièces au départ de la bande 5. Bien qu'à plat, les pièces sont orientées de manière quelconque sur le plan de la bande 5 et, la bande 9 alignement de la section 10, qui est animée d'une vitesse A supérieure à celle de la bande 5, fait tourner les pièces en coopérant avec le guide fixe 7, afin qu'en sortie de la section 10 celles-ci présentent leur plus grande dimension longitudinale dans le sens de défilement. Sur la figure 4, on voit un exemple de réalisation schématique de cette section d'alignement. La pièce 40 constitue la table sur laquelle la bande 5 circule, qui est pourvue latéralement de moyens de fixation des accessoires de la section d'alignement, par exemple une rainure en T 41 sur laquelle une équerre 42 de support réglable en hauteur par rapport à la pièce 40, permet la fixation d'une platine 43 porteuse des galets d'entraînement et de renvoi de la bande 9. Les moyens de fixation de la platine 43 sur l'équerre 42 ( des orifices oblongs) permettent de régler la convergence de la bande 9 par rapport au guide fixe. Le galet 44 est le galet d'entraînement de la bande 9 associé à un moteur 45 qui est situé sous la platine 43. Enfin, sur cette figure on voit que la tension de la bande 9 est réglée par un bras 46 articulé à la platine 43 par l'une de ses extrémités et portant à son autre extrémité un galet 47, tandis qu'un ressort 48 presse le galet 47 contre la bande 9.

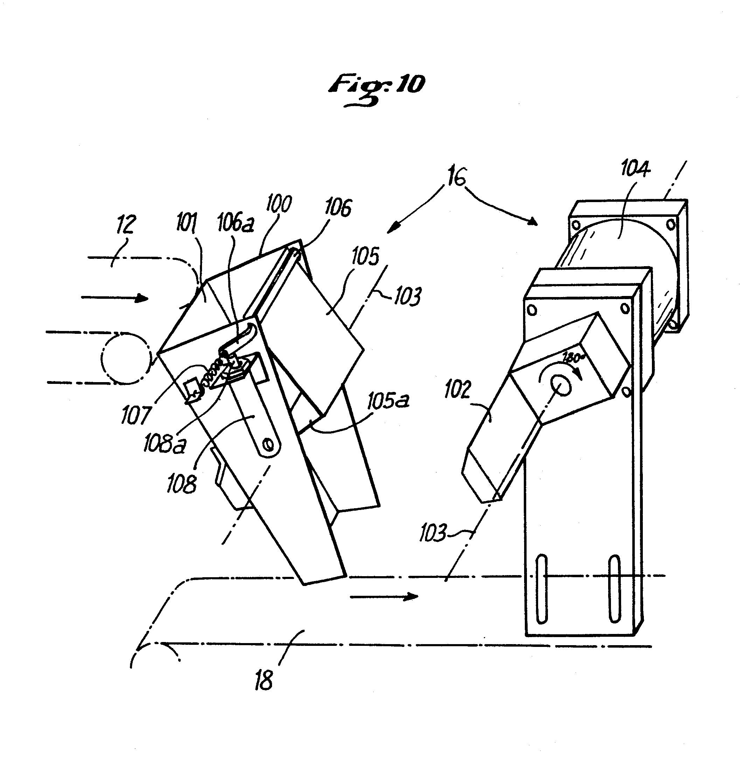

La file de pièces quittant la section 10 est reprise par la bande 12 de la section 11, au niveau de laquelle elle est arrêtée par la butée 13, lorsque celle-ci est en position active. Cette butée 13 est représentée à la figure 5. Il s'agit d'une tige 51, d'un vérin 50 dont le corps est solidaire d'une platine 52, possédant une semelle perpendiculaire 53 pouvant être fixée et réglée en hauteur dans la rainure 41 d'une table semblable à celle 40 décrite en regard de la figure 4. L'escamotage de la butée 13 s'opère par commande pneumatique du vérin 50.

Dans cette première section de retournement 11, en amont de la butée 13, on a disposé un moyen de blocage 14 latéral de la file de pièces s'accumulant derrière cette butée. Le mode de réalisation de ce moyen de blocage latéral est décrit en regard de la figure 6. Il consiste essentiellement en un coussin pneumatique 60, dont l'alimentation est réalisée par un embout de raccordement 61, qui est porté par un support 62 en équerre, dont l'aile horizontale 62a permet le réglage transversal, alors que l'aile verticale 62b permet le réglage en hauteur de la position du coussin 60 par rapport à la surface supérieure de la bande 12. Par cette disposition, la butée 13 ne retient qu'une seule pièce 10 à l'encontre de la force d'entraînement de la bande 12, le reste de la file s'accumulant derrière la pièce 6 bloquée par le coussin 60.

Entre la butée 13 et le coussin 60, on a disposé un palpeur vertical 15 dont un mode de réalisation est représenté à la figure 7. Ce palpeur est attelé à la table de circulation de la bande 12 au moyen d'une équerre 70 dont les branches horizontale 70a et verticale 70b permettent les réglages de sa position au-dessus de la bande 12. Ce palpeur est constitué par exemple par un vérin pneumatique 71 dont l'extrémité de la tige porte un patin 72, tandis qu'un capteur 73 permet de délivrer un signal pour une valeur prédéterminée de la course de la tige. Ce signal est destiné à la commande de l'organe de retournement 16, soit directement, soit par l'intermédiaire d'un registre, si, entre le palpage et l'organe de retournement 16, on dispose d'une section d'accumulation des pièces. Bien entendu, on peut mettre en oeuvre, entre le coussin 60 et la butée 13, plusieurs palpeurs dont le signal de sortie est combiné pour donner une information valable à l'organe de retournement 16.

L'organe de retournement 16 a pour fonction de retourner la pièce autour d'un axe horizontal 16a, c'est-à-dire d'intervertir ses faces supérieure et inférieure. Deux modes de réalisation de cet organe représentés aux figures 9 et 10 seront décrits ultérieurement.

La section 17 met en oeuvre une butée 13′ semblable à la butée 13 de la Figure 5 puis, un organe de blocage 14′ semblable au patin 60 et un

ou plusieurs palpeurs 15' semblables à celui représenté en Figure 7. Le dispositif de retournement 21 autour d'un axe vertical 21a sera décrit plus en détail en regard de la figure 8.

En revenant à la section 11, on rappellera que la pièce 6 arrêtée par la butée 13 peut se présenter selon l'une des quatre orientations de la figure 1. Si l'on met en oeuvre deux palpeurs 15, disposés à l'aplomb des deux coins opposés de la pièce pouvant normalement présenter l'échancrure G (fig. 1), et que l'on règle le capteur 73 de chacun de ces palpeurs, de manière qu'il émette un signal si la course de la tige 72 dudit piston est supérieure à celle qu'il lui faut pour atteindre la face supérieure de la pièce, et si l'on associe les signaux émis par chacun de ces palpeurs avec une fonction OU, on peut déterminer si la pièce 6 présente sa bonne ou sa mauvaise face du côté supérieur. En effet, un signal sera émis si la pièce est dans sa position 6a ou dans sa position 6d. En revanche, pour les positions 6b et 6c ni l'un ni l'autre des palpeurs ne délivrera de signal, la course de la tige 72 étant interrompue par la face supérieure de la pièce. En présence d'un signal émis par l'un ou l'autre des palpeurs, l'unité de retournement 16 n'est pas activée et la pièce 6 la traverse sans être retournée. En effet, c'est le cas où la pièce se présente avec la face convenable située à sa partie supérieure.

En revanche, en l'absence de signal, la pièce est arrêtée au niveau du dispositif 16 comme on le verra ultérieurement et est retournée par ce dispositif. Ainsi toutes les pièces qui sortiront de la première section de retournement 11 présenteront une face supérieure convenable.

Il faut noter par ailleurs que le séquencement des opérations comprend : le retrait des organes de palpage, l'escamotage de la butée 13, la pièce pouvant alors être conduite par la bande 12 continuellement en mouvement dans le dispositif 16, la remise en position active de la butée 13, le relâchement du coussin pneumatique 60 laissant ainsi échapper une pièce, le resserrement de ce coussin et le palpage de la pièce comprise entre celle serrée par le coussin et la butée 13. Cette séquence d'opérations est la même en ce qui concerne la seconde section 17 de retournement.

Les pièces arrivant dans cette seconde section ne peuvent donc plus être orientées que comme les pièces 6a ou 6b de la figure 1. Avec un palpeur convenablement placé à l'aplomb de l'un des angles de cette pièce, on peut délivrer un signal indiquant si cette pièce est dans la position finale désirée ou si, au contraire, il convient de la retourner pour la placer dans cette position. Le retournement de la pièce autour de l'axe vertical 21a est ou n'est pas commandé selon l'existence de ce signal. A l'extrémité de la section 17, toutes les pièces se trouvent donc dans l'orientation de celles 6d représentées à la figure 1.

Le dispositif de retournement 21, représenté à la figure 8, est constitué par une potence 80, réglable en hauteur par rapport à la bande par son aile verticale 80a. Son aile horizontale 80b supporte de manière réglable un organe moteur rotatif 81, qui est équipé à sa partie inférieure d'un étrier 82 formant couloir rotatif de largeur réglable au moyen de la paroi mobile 82a et des organes 82b.

L'extrémité aval du couloir rotatif 82 par rapport au sens de déplacement D de la bande 18, possède un taquet 83 de retenue, escamotable, des pièces introduites dans le couloir. Ce taquet soumis à l'effet d'un ressort de rappel 84 tendant à le placer dans une position non escamotée, et à l'effet d'une tringlerie 85 en forme de levier coudé, dont l'extrémité 85a est conformée en un poussoir coopérant avec la tige d'un petit vérin pneumatique 86. Ainsi, lorsque la pièce palpée est à retourner, la tige du vérin 86 est rétractée et le taquet 83 intercepte la pièce qui parvient dans le couloir 82. La rotation du couloir 82 est ensuite commandée sur 180°, la pièce pouvant alors quitter ce couloir sous l'effet d'entraînement de la bande 18, lorsque l'ouverture d'entrée du couloir 82 est amenée sensiblement en position aval. Le couloir 82 est ramené ensuite à sa position initiale par un demi-tour inverse. Si la pièce suivante n'a pas à être retournée, l'information émise par le dispositif de palpage conduit à l'alimentation du vérin 86, qui coopérant avec le levier 85, escamote le taquet 83. La pièce traverse librement le couloir 82, entraînée par la bande 18.

La figure 9 illustre un mode de réalisation du dispositif 16 de retournement. Celui-ci comporte un support 90 formant un U de largeur réglable et attelable à la table de circulation de la bande 12, l'une des branche 90a du U portant un moteur 91 dont l'axe d'entraînement est attelé à un bras basculant 92a et est accouplé à une poulie de renvoi 93 qui elle-même est calée en rotation sur un arbre de transmission 94 pour une poulie menée 95 accouplée au bras opposé 92b. La poulie 95 peut coulisser le long de l'arbre 94, pour permettre le réglage de l'écartement des deux branches du U. L'autre aile 90b du U porte un vérin pneumatique 96 dont la tige 96a constitue une butée transversale escamotable pour les pièces circulant entre les bras 92a et 92b. Ces bras sont équipés sur leur faces en regard d'un coussin pneumatique 97, permettant de serrer la pièce qui circule entre eux. Lorsque l'ordre émis par le palpeur 15 signifie que la pièce présente sa face convenable à la partie supérieure, la tige 96a est maintenue dans sa position rétractée. La pièce peut alors circuler dans le sens D entre les bras 92a et 92b et poursuivre son déplacement en direction de la section 17. Si en revanche le palpage de la pièce nécessite un retournement, la tige 96a du vérin 96 est sortie, pour intercepter la pièce qui s'immobilise entre les bras 92a et 92b. On commande alors le gonflage des coussins pneumatiques 97 puis la rétraction de la tige 96a. Le moteur 91 effectue alors le basculement des deux bras. La pièce est retournée et déposée en aval du dispositif 16, et libérée par le dégonflement des coussins 97. Les bras sont ensuite ramenés dans leur position initiale.

Sur la figure 10 on a représenté un autre mode de réalisation du dispositif 16. Celui-ci implique que la bande 12 de la section 11 soit située à un niveau supérieur de la bande 18 de la section 17. Le dispositif comporte alors un godet 100 dont une paroi inférieure 101 est fixée à un bras de retournement 102, représenté sur la figure décalé vers la droite pour une plus grande clarté du dessin, le bras 102 pouvant être tourné autour d'un axe 103 par le moteur 104. A sa partie supérieure, le godet 100 comporte une trappe 105 dont une aile d'extrémité 105a formant le fond du godet peut pénétrer à l'intérieur du godet 100 en direction de la paroi 101 pour intercepter une pièce y parvenant. La trappe 105 est articulée autour d'un axe 106 à son extrémité opposée à l'aile 105a. Un ressort 107 agit sur un levier 106a solidaire de la trappe 105, dans le sens du rabattement de la trappe à l'intérieur du godet. De manière antagoniste, la tige 108a d'un vérin 108, agit, lorsque le vérin est commandé, sur le levier 106a pour placer la trappe à l'extérieur du couloir que constitue le godet 100. En position d'attente, le godet 100 est placé de manière que sa paroi 101 constitue un plan incliné de transfert des pièces entre la bande 12 et la bande 18. Si la pièce quittant la bande 12 est correctement orientée, le dispositif de palpage 15 aura une information selon laquelle le vérin 108 sera commandé pour basculer la trappe 105 vers l'extérieur du godet 100 . La pièce glissera donc de la bande 12 vers la bande 18 sur la surface inclinée 101 du godet. Si en revanche cette pièce doit être retournée le vérin 108 n'est pas commandé, et la pièce tombant dans le godet 100 est arrêtée par la trappe 105 . A ce moment la rotation du moteur 104 est commandée, l'ouverture du godet est amenée au voisinage de la bande 18, la pièce reposant sur la trappe 105 qui, en position finale, se trouve inclinée par rapport à la bande 18, et glissant alors de cette trappe sur la bande. Le godet est ensuite ramené dans sa position d'attente.

La conception modulaire de la ligne d'acheminement selon l'invention permet d'adapter cette dernière en fonction des besoins et notamment des caractéristiques géométriques des pièces à orienter. Elle permet également de conformer la ligne selon un trajet propre à la disposition du local dans lequel elle doit être installée. On peut ainsi prévoir entre les bandes des dispositifs de transfert, constitués par exemple par des disques passant sous la bande amont et sur la bande aval afin que la ligne d'acheminement puisse comporter des coudes, voire des retours à 180°, entre les sections.

L'invention trouve une application intéressante dans le domaine de la manutention.

**Revendications**

1. Ligne d'acheminement de pièces (6) circonscrites dans une enveloppe théorique sensiblement parallélépipédique dont la hauteur (h) est inférieure à la largeur (b) elle-même inférieure à la longueur (L) depuis un poste de chargement en vrac jusqu'à un poste de distribution orientée des pièces, caractérisée en ce qu'elle comporte une succession de sections modulaires (1, 10, 11, 17) de transport et d'orientation comprenant :
- une première section (1) d'extraction des pièces d'une trémie (2) d'approvisionnement comportant une bande transporteuse plane (3) et des moyens (4) pour éliminer toute pièce qui ne présente pas sa hauteur (h) perpendiculairement au plan de la bande (3),
- une seconde section (10) d'alignement des pièces comportant une bande transporteuse plane (5) et des moyens (9) pour orienter la longueur susdite parallèlement au sens de déplacement de la bande (5),
- au moins une troisième section (11,17) de retournement de pièces, comportant une bande transporteuse plane (12,18), des moyens (13, 13') pour immobilier chaque pièce, des moyens de reconnaissance (15, 15') par palpage perpendiculaire à la bande (12,18) de la face supérieure de la pièce immobilisée, et des moyens de retournement (16,21) de la pièce autour d'un axe (16a, 21a) perpendiculaire à la direction de déplacement de la bande, activés en réponse aux informations recueillies par lesdits moyens de palpage.

2. Ligne d'acheminement selon la revendication 1 caractérisée en ce que les moyens de retournement (21) de la pièce sont disposés autour d'un axe (21a) perpendiculaire à la surface de la bande transporteuse (18).

3. Ligne d'acheminement selon la revendication 1 caractérisée en ce que les moyens de retournement (16) de la pièce sont disposés autour d'un axe (16a) parallèle à la surface de la bande transporteuse (12).

4. Ligne d'acheminement selon l'une quelconque des revendications 2 et 3, caractérisée en ce qu'elle comporte deux troisièmes sections (11,17) susdite dont les axes de retournement sont sensiblement perpendiculaires.

5. Ligne d'acheminement selon l'une quelconque des revendications précédentes, caractérisée en ce que la première section (1) susdite comprend une bande d'extraction (3) ascendante pourvue de taquets (3a) d'entraînement des pièces, et circulant sous une butée (4) oblique transversale distante de la bande (3) d'une valeur légèrement supérieure à la hauteur des pièces, constituant guide pour l'élimination latérale des pièces présentant, perpendiculairement à la bande, une dimension supérieure à ladite hauteur (h).

6. Ligne d'acheminement selon l'une quelconque des revendications précédentes, caractérisée en ce que la seconde section (10) susdite comprend une bande transporteuse (5) sensiblement horizontale, animée d'une vitesse de translation supérieure à celle de la bande (3) d'extraction et deux guides latéraux convergents (9 et 7) l'un des guides étant constitué par une bande (9) souple mobile dans la direction de la bande transporteuse (5) à une vitesse supérieure à celle de cette dernière.

7. Ligne d'acheminement selon l'une quelconque des revendications précédentes, caractérisée en ce que la troisième section (11,17) susdite comprend une bande transporteuse (12,18) sensiblement horizontale, une butée escamotable (13) (13') transversalement à la bande et au-dessus de celle-ci, un moyen de

blocage latéral (14,14'), des pièces contre un guide latéral fixe (8,20), en amont de la butée (13,13') et distant de celle -ci d'une valeur sensiblement égale à la longueur d'une pièce, un dispositif de palpage (15,15') mobile verticalement par rapport à une potence fixe (70) et surplombant la bande entre la butée et le dispositif de blocage, et un organe de retournement (16,21) commandé par l'information délivrée par le dispositif de palpage (15,15') et situé en aval de la butée (13,13'), comprenant une butée (83, 96a et 105a), en position de repos active, escamotable, associée à l'extrémité aval d'un couloir (82,92a,92b, 100) formé par des parois latérales de contention de la pièce, montées à rotation commandée autour d'un axe (16a, 21a, 103) perpendiculaire à la direction de déplacement de la bande (12,18).

8. Ligne d'acheminement selon la revendication 7 caractérisée en ce que l'axe (21a) est perpendiculaire à la bande (18), les parois étant constituées par des plaques de guidage parallèles audit axe.

9. Ligne d'acheminement selon la revendication 7 caractérisée en ce que l'axe (16a, 103) susdit est parallèle à la bande (12), les parois susdites étant constituées par deux bras (92a, 92b) parallèles, articulés par leurs extrémités autour de l'axe (16a) et formant mâchoire de préhension de la pièce.

10. Ligne d'acheminement selon la revendication 7 caractérisée en ce que l'axe (103) susdit est parallèle à la bande (12) et est situé sous le niveau de cette dernière, à son extrémité aval, l'organe de retournement étant constitué par un godet (100) basculant autour de l'axe (103)susdit, comportant un fond escamotable (105a) qui constitue la butée susdite, et dont les côtés constituent lesdites parois latérales.

Fig:1

Fig:2A

Fig:2B

0273785

Fig.4
Fig.3
Fig.6
Fig.5
Fig.7

0273785

**Fig. 8**

**Fig. 9**

Fig.10

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | PATENT ABSTRACTS OF JAPAN, vol. 8, no. 182 (M-319)[1619], 22 août 1984; & JP-A-59 74 810 (SHINKO DENKI K.K.) 27-04-1984 --- | 1-10 | B 65 G 47/24 |
| A | DE-A-3 344 795 (HOBART CORP.) * Figures 1-3b; page 7, ligne 34 - page 9, ligne 23 * --- | 1-10 | |
| A | GB-A-1 347 863 (W. KAMMANN) * Figures 5,6; page 2, ligne 31 - page 5, ligne 30 * --- | 1-10 | |
| A | FR-A-2 182 148 (RAPISTAN) * Figure 2a * --- | 1,6 | |
| A | US-A-3 462 001 (J. BOYCE) * Figure 1; colonne 2, ligne 42 - colonne 3, ligne 12 * --- | 1,6 | |
| A | US-A-4 160 507 (W.L. MULLINS) * Figures 1,2; colonne 4, ligne 24 - colonne 5, ligne 46 * ----- | 1,9 | DOMAINES TECHNIQUES RECHERCHES (Int. Cl.4) B 65 G |

Le présent rapport a été établi pour toutes les revendications

| Lieu de la recherche | Date d'achèvement de la recherche | Examinateur |
|---|---|---|
| LA HAYE | 09-03-1988 | WERNER D.M. |